# EUROPÄISCHE PATENTANMELDUNG

(11) **EP 3 686 740 A2**
(43) Veröffentlichungstag der Anmeldung: **29.07.2020**
(21) Anmeldenummer: 20153403.9
(22) Anmeldetag: 23.01.2020
(51) Int. Cl.: G06F 9/50, G06F 16/2455, G06Q 10/06

(54) **VERFAHREN ZUM ERSTELLEN VON PROZESSPROTOKOLLEN**

(30) Priorität: 24.01.2019 US 201916256380
(71) Anmelder: Celonis SE, 80333 München (DE)
(72) Erfinder: Klenk, Martin, 80639 München (DE); Rinke, Alexander, 80799 München (DE)
(74) Vertreter: 2s-ip Schramm Schneider Bertagnoll Patent- und Rechtsanwälte Part mbB

(57) **Zusammenfassung**

Bereit gestellt wird ein computer-implementiertes Verfahren zum Erzeugen eines Prozessprotokolls in einem lokalen Computersystem, wobei das Prozessprotokoll aus Rohdaten erzeugt wird, die teilweise in einem ersten externen Computersystem und teilweise in einem zweiten externen Computersystem gespeichert sind, wobei die Rohdaten Daten umfassen, die bei der Ausführung von Prozessen in dem ersten externen Computersystem und in dem zweiten externen Computersystem erzeugt werden.

## Beschreibung

### Gebiet der Erfindung

Die Erfindung betrifft ein Verfahren zum Erzeugen von Prozessprotokollen, wobei die Daten, für die die Prozessprotokolle erzeugt werden sollen, in einer verteilten IT-Infrastruktur, d.h. auf unterschiedlichen Computersystemen gespeichert sind.

### Hintergrund der Erfindung

Reale Prozesse, etwa Businessprozesse (z.B. ein Bestellvorgang) oder technische Prozesse (z.B. ein Lackiervorgang), werden häufig in einem Computersystem oder mit Hilfe eines Computersystems ausgeführt. Ein solcher Prozess kann hierbei mehrere Prozessschritte umfassen. Jeder Prozessschritt kann bei der Ausführung Daten erzeugen, die in dem Computersystem, in dem der Prozess ausgeführt wird bzw. mit dessen Hilfe der Prozess ausgeführt wird, gespeichert werden.

Es ist bekannt, Prozesse, die in einem Computersystem oder mit Hilfe eines Computersystems ausgeführt wurden, zu analysieren. Hierbei werden aus den von den Prozessen bzw. von den jeweiligen Prozessschritten erzeugten Daten Informationen extrahiert, die für die Analyse der Prozesse relevant sind. Auf diese Weise können beispielsweise die in einem ERP-System durchgeführten Transaktionen oder die entlang einer Produktions-/Verarbeitungslinie ausgeführten Prozessschritte analysiert werden, um etwa Flaschenhälse oder sonstige Anomalien in den Prozessen zu erkennen. Die Analyse der Prozesse wird mit Hilfe eines sogenannten Process Mining Systems durchgeführt. Damit ein Process Mining System eine solche Analyse effizient durchführen kann, müssen dem Process Mining System die extrahierten Informationen in aufbereiteter Form zur Verfügung gestellt werden. Diese aufbereitete Form der extrahierten Informationen wird im Folgenden als Prozessprotokoll bezeichnet.

Die Analyse der Prozesse erfolgt im Stand der Technik in dem Computersystem in dem die Daten erzeugt und gespeichert wurden. Nachteilig hierbei ist, dass nur Prozesse, die in dem jeweiligen Computersystem ausgeführt wurden, analysiert werden können.

In der Praxis kann es vorkommen, dass Teilprozesse eines Prozesses auf unterschiedlichen Computersystemen ausgeführt werden und demzufolge auch auf den unterschiedlichen Computersystemen Daten erzeugen. So können etwa für einen Bestellprozess die Bestellinformationen und die dazugehörige Historie in einem ersten Computersystem gespeichert werden, während die Daten zu den Verkäufern und die Kontaktaufnahmen zu den Verkäufern in einem zweiten Computersystem gespeichert werden. Hierbei werden die Teilprozesse, die die Bestellungen betreffen, in dem ersten Computersystem und die Teilprozesse, die die Kontaktaufnahmen betreffen, in dem zweiten Computersystem ausgeführt. Bei technischen Prozessen, etwa Produktionsprozessen, können verschiedene Teilprozesse auf verschiedenen Produktionseinheiten ausgeführt werden, wobei die Daten der Teilprozesse in verschiedenen Computersystemen gespeichert werden können. Beispielsweise können Informationen zum Montageprozess in einem ersten Computersystem und Informationen zu einem nachfolgenden technischen Testprozess in einem zweiten Computersystem gespeichert werden.

Mit dem aus dem Stand der Technik bekannten Verfahren können die auf dem ersten Computersystem ausgeführten Teilprozesse analysiert werden. Die auf dem zweiten Computersystem ausgeführten Teilprozesse können ebenfalls analysiert werden, allerdings nur unabhängig von den auf dem ersten Computersystem ausgeführten Teilprozessen. Eine Analyse des gesamten Prozesses ist damit nicht möglich.

### Aufgabe der Erfindung

Aufgabe der vorliegenden Erfindung ist es daher, Lösungen bereitzustellen, die eine effiziente und einfache Analyse von Prozessen, die in unterschiedlichen Computersystemen und/oder mit unterschiedlichen Verarbeitungseinheiten ausgeführt wurden, zu ermöglichen.

### Erfindungsgemäße Lösung

Diese Aufgabe wird erfindungsgemäß durch ein Verfahren nach dem unabhängigen Anspruch gelöst. Vorteilhafte Ausgestaltungen und Weiterbildungen der Erfindung sind in den abhängigen Ansprüchen angegeben.

Bereit gestellt wird demnach ein Computer-implementiertes Verfahren zum Erzeugen eines Prozessprotokolls in einem lokalen Computersystem, das einen Prozessor und eine Speichereinrichtung aufweist, wobei das Prozessprotokoll aus Rohdaten erzeugt wird, die teilweise in einem ersten externen Computersystem und teilweise in einem zweiten externen Computersystem gespeichert sind, wobei die Rohdaten in den externen Computersystemen in einer Anzahl von Datentabellen gespeichert werden bzw. gespeichert sind, wobei die Rohdaten Daten umfassen, die bei der Ausführung von Prozessen in dem ersten externen Computersystem und in dem zweiten externen Computersystem erzeugt werden, und wobei das Verfahren umfasst:
(a) importieren der Datentabellen aus dem ersten externen Computersystem und aus dem zweiten externen Computersystem in das lokale Computersystem und Speichern der importierten Datentabellen in der Speichereinrichtung des lokalen Computersystems,
(b) in dem lokalen Computersystem, rekonstruieren der Beziehungen zwischen den importierten Datentabellen,
(c) in dem lokalen Computersystem, ermitteln und auswählen einer ersten Datentabelle aus der Anzahl von importierten Datentabellen, die Objekte enthält, zu denen das Prozessprotokoll erzeugt werden soll,
(d) in dem lokalen Computersystem, ermitteln und auswählen einer Anzahl von zweiten Datentabellen aus der Anzahl von importierten Datentabellen, die für das Erzeugen des Prozessprotokolls benötigt werden, basierend auf der ausgewählten ersten Datentabelle und basierend auf den Beziehungen zwischen den importierten Datentabellen,
(e) in dem lokalen Computersystem, erzeugen einer ausführbaren Transformation, die angepasst ist, basierend
   - auf der ausgewählten ersten Datentabelle,
   - auf den ausgewählten zweiten Datentabellen und
   - auf den Beziehungen zwischen der ausgewählten ersten Datentabelle und den ausgewählten zweiten Datentabellen
   Daten aus der ersten Datentabelle und aus den zweiten Datentabellen zu extrahieren und die extrahierten Daten als Prozessprotokoll zu speichern,
(f) in dem lokalen Computersystem, ausführen der Transformation und Speichern der extrahierten Daten als Prozessprotokoll und Bereitstellen des erzeugten Prozessprotokolls einem Process Mining System zum Analysieren und Rekonstruieren der in dem ersten externen Computersystem und in dem zweiten externen Computersystem ausgeführten Prozesse.

Vorteilhaft kann es sin, wenn zumindest eine der ausgewählten Datentabellen aus dem ersten externen Computersystem importiert wird, und zumindest eine der ausgewählten Datentabellen aus dem zweiten externen Computersystem importiert wird.

Beim Ausführen der Transformation in dem Schritt (f) können die Daten aus den in den externen Computersystemen gespeicherten Datentabellen extrahiert werden.

Vorteilhaft ist es, wenn beim Rekonstruieren der Beziehungen zwischen den importierten Datentabellen in dem Schritt (b) ermittelt wird, über welche Attribute die Datentabellen in Beziehung zueinander stehen.

Vorzugsweise stehen zwei Datentabellen dann miteinander in Beziehung, wenn ein Attribut der einen Datentabelle identisch oder ähnlich zu einem Attribut der anderen Datentabelle ist.

Vorteilhaft ist es, wenn die zwischen jeweils zwei importierten Datentabellen rekonstruierten Beziehungen gespeichert werden, wobei die Namen der beiden Datentabellen, die jeweiligen Attribute und eine Zuordnung der Attribute der einen Datentabelle zu den Attributen der anderen Datentabelle gespeichert werden.

Vorteilhaft ist es, wenn
- zu den aus dem ersten externen Computersystem importierten Datentabellen ein dazugehöriges erstes Datenmodell aus dem ersten externen Computersystem in das lokale Computersystem importiert wird, wobei die Beziehungen zwischen den aus dem ersten externen Computersystem importierten Datentabellen anhand des ersten Datenmodells rekonstruiert werden,
- zu den aus dem zweiten externen Computersystem importierten Datentabellen ein dazugehöriges zweites Datenmodell aus dem zweiten externen Computersystem in das lokale Computersystem importiert wird, wobei die Beziehungen zwischen den aus dem zweiten externen Computersystem importierten Datentabellen anhand des zweiten Datenmodells rekonstruiert werden,
sodass nur die Beziehungen zwischen den Datentabellen aus dem ersten externen Computersystem und den Datentabellen aus dem zweiten externen Computersystem ohne Verwendung eines Datenmodells rekonstruiert werden müssen.

Vorteilhaft ist es ferner, wenn beim Ermitteln und Auswählen einer ersten Datentabelle in dem Schritt (c) ermittelt wird, welche Datentabelle eine oder mehrere Bedingungen erfüllt, wobei die Bedingungen ausgewählt sind aus der Gruppe, umfassend
- die Datentabelle enthält im Vergleich zu den anderen Datentabellen wenige Datensätze,
- die Datentabelle enthält ein Attribut, in dem Zeitstempel gespeichert sind,
- die Datentabelle wird von wenigen anderen Datentabellen referenziert,
- und Kombinationen hiervon.

Informationen zu der ausgewählten ersten Datentabelle können gespeichert werden.

Vorteilhaft ist es, wenn beim Ermitteln und Auswählen einer Anzahl von zweiten Datentabellen in dem Schritt (d) jene Datentabellen ausgewählt werden, die eine oder mehrere Bedingungen erfüllen, wobei die Bedingungen ausgewählt sind aus der Gruppe, umfassend
- die Datentabellen enthalten im Vergleich zu der ersten Datentabelle viele Datensätze,
- die Datentabelle werden direkt oder indirekt von der ersten Datentabelle referenziert
- die Datentabellen enthalten jeweils ein Attribut, in dem Zeitstempel gespeichert sind,
- und Kombinationen hiervon.

Informationen zu den ausgewählten zweiten Datentabellen und zu den Beziehungen zwischen den ausgewählten zweiten Datentabellen und der ersten Datentabelle können gespeichert werden.

Vorteilhaft ist es, wenn beim Erzeugen der ausführbaren Transformation in dem Schritt (e) ermittelt wird, welche Attribute der ausgewählten ersten Datentabelle und der ausgewählten zweiten Datentabellen beim Extrahieren der Daten berücksichtigt werden.

Beim Ausführen der Transformation in dem Schritt (f) kann es vorteilhaft sein Datensätze aus der ersten Datentabelle und aus den zweiten Datentabellen auszulesen, wobei die ausgelesenen Datensätze die Attributswerte der für die jeweilige Datentabelle ermittelten Attribute umfasst, wobei die ausgelesenen Datensätze als Prozessprotokoll gespeichert werden, wobei jeder in dem Prozessprotokoll gespeicherte Datensatz einen Prozessschritt (Event) eines in dem ersten externen Computersystem und in dem zweiten externen Computersystem ausgeführten Prozesses repräsentiert.

Vorteilhaft ist es ferner, wenn die ausgelesenen Datensätze gemäß einer vorbestimmten Datenstruktur in dem Prozessprotokoll gespeichert werden, wobei die vorbestimmte Datenstruktur zumindest umfasst:
- ein erstes Attribut, in dem eine eindeutige Kennung des Prozesses des jeweiligen Prozessschrittes gespeichert ist;
- ein zweites Attribut, in dem eine Kennung des jeweiligen Prozessschrittes gespeichert ist; und
- ein drittes Attribut, in dem eine Reihenfolge der Prozessschritte innerhalb eines Prozesses gespeichert ist.

In einer vorteilhaften Ausgestaltung der Erfindung werden die Datensätze des Prozessprotokolls bzw. wird das Prozessprotokoll in einem Arbeitsspeicher, vorzugsweise in einem Arbeitsspeicher des lokalen Computersystems gespeichert.

Vorteilhaft ist es, wenn die zu einem Prozess gehörenden Prozessschritte im Arbeitsspeicher sortiert nach dem dritten Attribut an benachbarten Adressen gespeichert werden. Das Prozessprotokoll wird hierbei zunächst nach dem ersten Attribut und anschließend nach dem dritten Attribut sortiert, derart, dass aufeinanderfolgende Prozessschritte eines Prozesses in unmittelbar benachbarten Speicherabschnitten des Arbeitsspeichers gespeichert werden. Dadurch liegen die Prozesse im Arbeitsspeicher in gruppierter Form vor, sodass die Prozessschritte eines Prozesses in einem Stream sequentiell und in der richtigen Reihenfolge aus dem Arbeitsspeicher ausgelesen und verarbeitet werden können. "In einem Stream auslesen" bedeutet, dass die Prozessschritte eine Prozesses Adresse für Adresse aus dem Arbeitsspeicher ausgelesen werden.

Vorteilhaft ist es zudem, wenn die Attributswerte der Attribute des Prozessprotokolls aus
- den Attributswerten der ausgelesenen Datensätze und/oder
- aus den Tabellennamen und/oder Spaltennamen der ausgewählten ersten Datentabelle und/oder der ausgewählten zweiten Datentabellen
ermittelt werden.

### Kurzbeschreibung der Figuren

Einzelheiten und Merkmale der Erfindung sowie konkrete Ausgestaltungen der Erfindung ergeben sich aus der nachfolgenden Beschreibung in Verbindung mit der Zeichnung. Es zeigt:
- Fig. 1: ein Blockdiagramm eines IT-Systems mit mehreren Computersystemen, anhand dessen das erfindungsgemäße Verfahren zum Erzeugen von Prozessprotokollen erläutert wird; und
- Fig. 2: ein Ablaufdiagramm des erfindungsgemäßen Verfahrens zum Erzeugen von Prozessprotokollen.

### Detaillierte Beschreibung der Erfindung

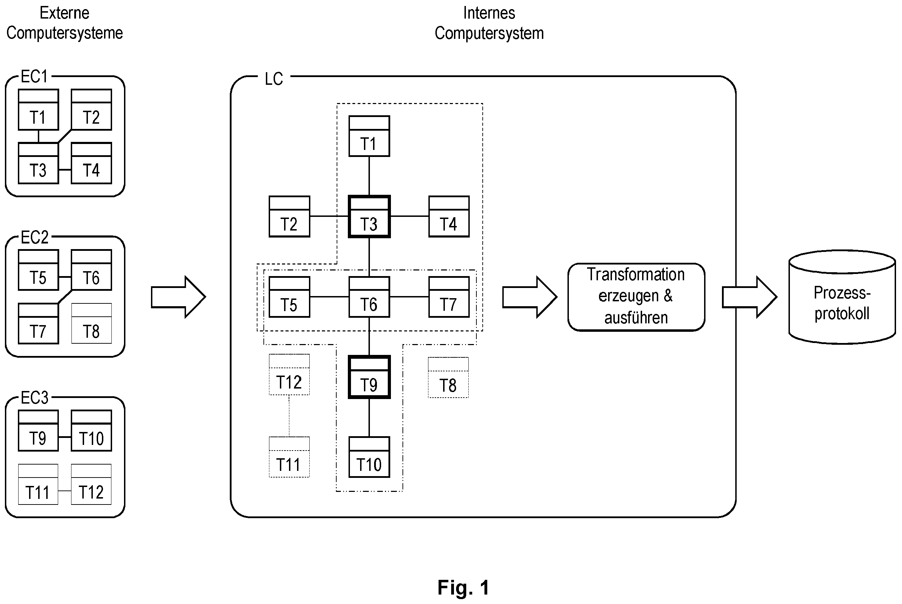

**Fig. 1** zeigt ein Blockdiagramm eines IT-Systems mit mehreren Computersystemen. Das IT-System besteht hier beispielhaft aus drei externen Computersystemen (EC1, EC2 und EC3) und aus einem internen Computersystem. Die Bezeichnungen "extern" und "intern" geben hierbei lediglich an, dass es sich um verschiedene Computersysteme handelt. Die Computersysteme sind über eine Kommunikationsverbindung miteinander gekoppelt. Insbesondere sind die externen Computersysteme jeweils mit dem internen Computersystem gekoppelt oder koppelbar. Bei den Computersystemen kann es sich um sogenannten On Premise Systeme oder um Cloud Systeme handeln.

Gemäß einer Ausgestaltung der Erfindung kann es sich bei den externen Computersystemen EC1, EC2, EC3 auch um Produktionseinrichtungen, Verarbeitungseinrichtungen oder dergleichen handeln, die jeweils über zumindest eine Datenverarbeitungseinrichtung verfügen. Vorzugsweise sind die Datenverarbeitungseinrichtungen mit einer Speichereinrichtung gekoppelt, in der die von der Produktionseinrichtung, Verarbeitungseinrichtung oder dergleichen bereitgestellten Daten gespeichert werden.

In den externen Computersystemen werden jeweils Teilprozesse eines übergeordneten Prozesses ausgeführt. Der übergeordnete Prozess wird auch als Gesamtprozess bezeichnet. So kann es sich bei dem Gesamtprozess beispielhaft um einen Einkaufsprozess handeln, der mit Hilfe der Computersysteme ausgeführt bzw. abgewickelt wird.

Nachfolgend werden Beispiele beschrieben, bei denen es sich bei den externen Computersystemen um originäre Computersysteme handelt. Die Beispiele gelten in entsprechender Weise aber auch für externe Computersysteme, bei denen es sich um Produktionseinrichtungen, Verarbeitungseinrichtungen oder sonstige technische Einrichtungen handelt, wobei diese Einrichtungen eine Datenverarbeitungseinrichtung, etwa einen Prozessor mit einer Speichereinrichtung, aufweisen oder mit einer solchen Datenverarbeitungseinrichtung gekoppelt sind.

Wesentlich für die vorliegende Erfindung ist, dass die externen Einrichtungen EC1, EC2, EC3 Teilprozesse eines übergeordneten Gesamtprozesses ausführen und zu den jeweiligen ausgeführten Teilprozessen Daten bereitstellen, aus denen gemäß dem erfindungsgemäßen Verfahren Prozessprotokolle für den übergeordneten Gesamtprozess erzeugt werden können.

Es können auch mehr als drei oder weniger als drei externe Einrichtungen vorgesehen sein.

### Beispiel:

- Bei einem ersten Teilprozess eines Einkaufsprozesses kann es sich um einen Bestellprozess handeln, mit dem Bestellungen abgewickelt werden. Der Bestellprozess wird beispielsweise in dem ersten externen Computersystem EC1 ausgeführt. Die Daten des Bestellprozesses und die dazugehörige Historie werden in dem ersten Computersystem EC1 gespeichert.
- Bei einem zweiten Teilprozess kann es sich um Kontaktaufnahmen mit einem Verkäufer eines Zulieferers handeln, für den im ersten Computersystem EC1 Bestellungen erzeugt wurden. Die Kontaktaufnahmen werden beispielsweise in dem zweiten externen Computersystem EC2 abgewickelt. Die Daten zu den Kontaktaufnahmen und Details zu den Zulieferern sowie deren Verkäufer werden in dem zweiten Computersystem EC2 gespeichert.
- Ein dritter, zu dem Gesamtprozess gehörender Teilprozess, kann auf dem dritten externen Computersystem EC3 ausgeführt werden. Die Daten des dritten Teilprozesses werden in dem dritten Computersystem EC3 gespeichert.

Bei dem in Fig. 1 gezeigten Beispiel wird der Gesamtprozess auf drei Computersystemen EC1, EC2 und EC3 ausgeführt. Ein Gesamtprozess kann aber auch auf mehr oder weniger als drei Computersystemen ausgeführt werden (im Sinne der vorliegenden Erfindung ab auf mindestens zwei Computersystemen).

Die jeweiligen Daten werden in den jeweiligen Computersystemen in strukturierter Form gespeichert, beispielsweise in Tabellen T1 bis T12 eines relationalen Datenbanksystems. Hierbei können in jedem Computersystem unterschiedliche Datenbankmanagementsysteme und unterschiedliche Datenbanktechnologien (relationale, objektorientierte, hierarchische Datenbanksysteme, etc.) verwendet werden. In der nachfolgenden Beschreibung wird davon ausgegangen, dass die Daten in den jeweiligen Computersystemen in Tabellen eines relationales Datenbanksystems gespeichert sind, wobei die Erfindung nicht hierauf beschränkt ist.

Die Tabellen bzw. die Daten dieser Tabellen stehen in einer bestimmten Beziehung zueinander. Diese Beziehungen sind in Fig. 1 durch die Verbindungslinien zwischen den in den Computersystemen EC1 bis EC3 gezeigten Tabellen T1 bis T12 gezeigt. In den jeweiligen Computersystemen EC1 bis EC3 können zudem Strukturtabellen vorhanden sein (in Fig. 1 nicht gezeigt), in denen Informationen zu den jeweiligen Tabellen und deren Beziehungen zueinander gespeichert sind. Diese Strukturtabellen können optional für das erfindungsgemäße Erzeugen eines Prozessprotokolls verwendet werden, wie weiter unten näher erläutert wird. Diese Strukturtabellen werden auch als Datenmodell bezeichnet.

Zum Erzeugen des Prozessprotokolls werden zunächst die Datentabellen T1 bis T12 in das interne Computersystem importiert.

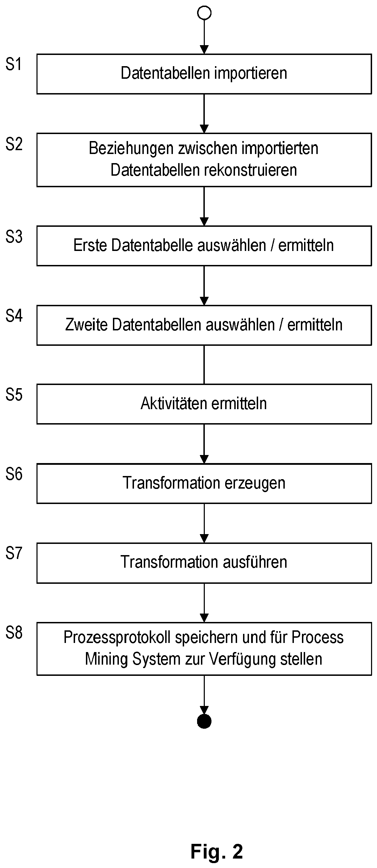

Anschließend werden im internen Computersystem die Beziehungen zwischen den importierten Datentabellen rekonstruiert, wobei einerseits die Beziehungen zwischen den aus einem bestimmten externen Computersystem importierten Datentabellen rekonstruiert werden und andererseits die Beziehungen zwischen den Datentabellen eines Computersystem und den Datentabellen eines anderen Computersystem. Beispielsweise werden die Beziehungen zwischen den Tabellen T1 bis T4 (die aus dem Computersystem EC1 importiert wurden) und zwischen den Tabellen T5 bis T8 (die aus dem Computersystem EC2 importiert wurden) rekonstruiert. Zudem werden die Beziehungen zwischen den Tabellen T1 bis T4 und den Tabellen T5 bis T9 rekonstruiert (in Fig. 1 die Beziehung zwischen der Tabelle T3 und der Tabelle T6 und die Beziehung zwischen der Tabelle T6 und der Tabelle T9). Wie diese Beziehungen konkret ermittelt bzw. rekonstruiert werden, wird mit Bezug auf Fig. 2 näher beschrieben.

Die Verbindungslinien zwischen den importierten Tabellen in dem internen Computersystem zeigen diese rekonstruierten Beziehungen.

Nachdem die Beziehungen rekonstruiert wurden, existiert im internen Computersystem ein Datenbankschema, das die Tabellen und deren Beziehungen zueinander für alle aus den externen Computersystemen EC1 bis EC3 importierten Tabellen T1 bis T12 beschreibt.

Nach der Rekonstruktion der Beziehungen zwischen den importierten Datentabellen T1 bis T12 wird ermittelt, welche Businessobjekte sich für das Erzeugen eines Prozessprotokolls eignen. Mit Bezug auf das oben erwähnte Beispiel können solche Businessobjekte beispielsweise "Bestellungen" und "Verkäufer" sein. Die Bestellungen sind hier beispielsweise in der Tabelle T3 und die Verkäufer in der Tabelle T9 gespeichert. Das Ermitteln dieser Businessobjekte wird mit Bezug auf Fig. 2 im Detail beschrieben. Die Tabellen in dem internen Computersystem, die diese ermittelten Businessobjekte speichern, weisen in Fig. 1 einen fetten Rahmen auf.

Nach einer vorteilhaften Ausgestaltung des erfindungsgemäßen Verfahrens wird eines der ermittelten Businessobjekte automatisch ausgewählt, beispielsweise das Businessobjekt "Bestellungen". D.h. dass die Tabelle T3 automatisch ausgewählt wird. Die Auswahl kann hierbei basierend auf vorbestimmten Bedingungen erfolgen, etwa der Anzahl der Datensätze und/oder der Anzahl der in diesen Tabellen gespeicherten Zeitstempel und/oder wie oft eine Tabelle in der Vergangenheit ausgewählt wurde (manuell oder automatisch).

Alternativ kann die Auswahl eines Businessobjekts (sofern mehrere geeignete Businessobjekte ermittelt wurden) auch durch einen Benutzer vorgenommen werden. Dem Benutzer werden hierbei die ermittelten Businessobjekte zur Auswahl angeboten. Die Liste der Businessobjekte kann nach vorbestimmten Bedingungen sortiert werden, etwa der Anzahl der Datensätze und/oder der Anzahl der in diesen Tabellen gespeicherten Zeitstempel und/oder wie oft eine Tabelle in der Vergangenheit ausgewählt wurde (manuell oder automatisch).

Im weiteren Verfahren wird das ausgewählte Businessobjekt, d.h. die ausgewählte Tabelle als Basistabelle für das Erzeugen eines Prozessprotokolls verwendet.

Basierend auf der Basistabelle (ausgewähltes Businessobjekt) werden aus den in das interne Computersystem importierten weiteren Tabellen jene Tabellen ausgewählt, die für das Erzeugen eines Prozessprotokolls oder mehrerer verschiedener Prozessprotokolle benötigt werden. Mehrere verschiedene Prozessprotokolle sind beispielsweise dann möglich, wenn basierend auf der Basistabelle verschiedene Aktivitäten mit Hilfe von Prozessprotokollen ausgewertet werden können. Im Beispiel des Businessobjektes "Bestellungen" können solche Aktivitäten beispielsweise die Preisänderungen innerhalb eines Bestellprozesses oder die Kontaktaufnahmen mit dem Verkäufer innerhalb eines Bestellprozesseses sein.

Basierend auf der Basistabelle T3 und den (direkten und indirekten) Beziehungen der Basistabelle T3 zu den anderen importierten Tabellen werden bei dem in Fig. 1 gezeigten Beispiel die Tabellen T1 und T4 bis T7 ausgewählt (in Fig. 1 durch die gestrichelte Umrandung kenntlich gemacht). Die Auswahl der weiteren Tabellen erfolgt basierend darauf, ob sich die Tabellen für das Erzeugen eines Prozessprotokolls eignen. Beispielsweise eignen sich weitere Tabellen (zusammen mit der Basistabelle) dann für das Erzeugen eines Prozessprotokolls, wenn die weiteren Tabellen im Vergleich zur Basistabelle jeweils viele Datensätze enthalten und/oder die weiteren Tabelle direkt oder indirekt von der Basistabelle referenziert werden und/oder die weiteren Tabellen mindestens ein Attribut aufweisen, in dem ein Zeitstempel gespeichert wird. Weitere Tabellen können sich auch dann für das Erzeugen von Prozessprotokoll eignen, wenn sie zuvor bereits für das Erzeugen von Prozessprotokollen verwendet wurden.

Bei dem in Fig. 1 gezeigten Beispiel wird die Tabelle T2 zwar direkt von der Basistabelle T3 referenziert. In dieser Tabelle T2 wird beispielsweise nur die Art der Bestellung gespeichert (z.B. Online-Bestellung, Bestellung per Fax, Bestellung per Post, Bestellung per Telefon). Demnach weist die Tabelle T2 keine Zeitstempel auf und enthält im Vergleich zur Basistabelle nur sehr wenige Datensätze. Die Tabelle T2 ist damit für das Erzeugen Prozessprotokollen nicht relevant.

Würde bei dem in Fig. 1 gezeigten Beispiel die Tabelle T9 als Basistabelle (Businessobjekt "Verkäufer") ausgewählt, wählt das System beispielsweise die weiteren Tabellen T5 bis T7 und T10 als für das Erzeugen eines Prozessprotokolls relevante weitere Tabelle aus (in Fig. 1 durch die Strich-Punkt-Umrahmung kenntlich gemacht).

Nach der Auswahl der relevanten weiteren Tabellen ermittelt das System basierend auf der Basistabelle und den dazugehörigen weiteren Tabellen Aktivitäten, für die ein Prozessprotokoll erzeugt werden kann. Am Beispiel der Basistabelle T3 (Bestellungen) und den ausgewählten weiteren Tabellen T1 und T4 bis T7 können solche Aktivitäten beispielsweise die Preisänderungen innerhalb eines Bestellprozesses oder die Kontaktaufnahmen mit dem Verkäufer innerhalb eines Bestellprozesseses sein.

Je nach Aktivität sind gegebenenfalls unterschiedliche Tabellen der ausgewählten weiteren Tabellen für das Erzeugen des Prozessprotokolls relevant.

Wären in der Tabelle T4 die Preisänderungen einer Bestellung samt den relevanten Zeitstempeln gespeichert, dann wäre diese Tabelle neben der Basistabelle T3 für ein Prozessprotokoll zur Auswertung der Preisänderungen von Bestellungen relevant. Neben den Änderungen des Preises können in der Tabelle T4 auch Änderungen der Bestellmengen samt der dazugehörigen Zeitstempel gespeichert sein. Für die Aktivität "Preisänderungen in Bestellungen" müsste diese Tabelle nach Preisänderungen gefiltert werden, für eine Aktivität "Änderung der Bestellmenge" müsste diese Tabelle nach entsprechenden Änderungen gefiltert werden. Für jede ermittelte Aktivität speichert das System die hierfür benötigten Filterkriterien ab (sofern notwendig). Ob ein Datensatz in der Tabelle T4 zu einer Preisänderung oder zu einer Bestellmengenänderung gehört, kann beispielsweise anhand eines Attributes ermittelt werden, in dem für jeden Datensatz die Art der Änderungen gespeichert ist.

Neben diesen beiden Aktivitäten, die in der Tabelle T4 gespeichert sind, kann auch eine allgemeine Aktivität "Änderung der Bestellung" ermittelt werden, wofür kein Filterkriterium notwendig wäre.

Wären in der Tabelle T6 die Kontaktaufnahmen zu einem Verkäufer samt der relevanten Zeitstempel gespeichert, dann wäre diese Tabelle für ein Prozessprotokoll zur Auswertung der Preisänderungen von Bestellungen nicht relevant. Für ein Prozessprotokoll zur Auswertung der Kontaktaufnahmen mit dem Verkäufer innerhalb eines Bestellprozesseses wäre diese Tabelle hingegen relevant.

Weitere Aktivitäten könnten das Erzeugen einer Bestellung oder das Bestätigen einer Bestellung durch den Verkäufer sein. Hierfür bräuchte es keine weitere Tabelle, wenn in der Tabelle T3 ein Datum gespeichert ist, an dem die Bestellung angelegt wurde, und ein Datum, an dem die Bestellung bestätigt wurde.

Für ein Prozessprotokoll zur Auswertung der Preisänderungen von Bestellungen aufgrund von Kontaktaufnahmen mit dem Verkäufer innerhalb eines Bestellprozesseses wären hingegen beide Tabellen T4 und T6 relevant.

Die ermittelten Aktivitäten können auch Bestandteil eines übergeordneten Prozesses sein. Ein solcher Prozess kann beispielsweise der Bestellprozess an sich sein, der die Prozessschritte (Aktivitäten)
- Erzeugen einer Bestellung,
- Preisänderungen in Bestellungen,
- Kontaktaufnahmen mit dem Verkäufer, und/oder
- Bestätigen einer Bestellung
enthält.

Für einen solchen Prozess kann ebenfalls ein Prozessprotokoll erzeugt werden. Bei vorstehendem Beispiel wären hierfür neben der Basistabelle T3 auch de Tabellen T4 und T6 für das Erzeugen eines Prozessprotokolls relevant.

Für jede ermittelte Aktivität speichert das System neben gegebenenfalls relevanten Filterkriterien auch Attribute / Spaltennamen (plus gegebenenfalls den dazugehörigen Tabellennamen), deren Werte für das Erzeugen eines Prozessprotokolls zwingend notwendig sind. Ein solches zwingend notwendiges Attribut ist etwa ein Zeitstempel, mit dem die Reihenfolge der Aktivitäten innerhalb eines Prozesses festgelegt wird.

Mit Hilfe eines Prozessprotokolls, das für den Bestellprozess erzeugt wird, kann ein Process Mining System, dem das Prozessprotokoll zu Verfügung gestellt wird, die Bestellprozesse analysieren. Beispielsweise kann mit einem Process Mining System festgestellt werden, dass bei x% der Bestellprozesse mehr als y Kontaktaufnahmen mit dem Verkäufer stattgefunden haben, oder dass bei x% der Bestellprozesse mindestens y Preisänderungen stattgefunden haben, oder dass x% der Bestellprozesse innerhalb eines bestimmten Zeitraumes bestätigt wurden.

Aus den ermittelten Aktivitäten kann das System nunmehr eine oder mehrere Aktivitäten auswählen, um hierzu die entsprechenden Prozessprotokolle zu erzeugen. Es kann für jede ausgewählte Aktivität ein eigenes Prozessprotokoll erzeugt werden. Ebenso kann für mehrere ermittelte Aktivitäten ein gemeinsames Prozessprotokoll erzeugt werden (so kann für die Aktivitäten Erzeugen einer Bestellung, Preisänderungen in Bestellungen, Kontaktaufnahmen mit dem Verkäufer und Bestätigen einer Bestellung ein gemeinsamen Prozessprotokoll für den Prozess Bestellungen erzeugt werden).

Alternativ kann der Benutzer auch aus den ermittelten Aktivtäten jene Aktivitäten auswählen, für die (separate oder ein gemeinsames) Prozessprotokolle erzeugt werden sollen.

Aufgrund der ausgewählten Aktivitäten und den ermittelten Beziehungen zwischen den Tabellen, ist das System nunmehr in der Lage die hierfür erforderlichen Tabellen auszuwählen und basierend hierauf zumindest ein Prozessprotokoll zu erzeugen.

Basierend auf den für ein Prozessprotokoll benötigten Tabellen (Basistabelle und dazugehörigen relevante weitere Tabellen gemäß den ausgewählten Aktivitäten) und den Beziehungen zwischen den benötigten Tabellen (die gegebenenfalls abhängig sind von den ausgewählten Aktivitäten) wird im internen Computersystem eine Transformation erzeugt, die aus den notwendigen Attributen der für ein Prozessprotokoll relevanten Tabellen und unter Berücksichtigung der relevanten Beziehungen zwischen den für das Prozessprotokoll relevanten Tabellen Daten extrahiert und die extrahierten Daten als Prozessprotokoll speichert. Das Extrahieren der Daten erfolgt unter Verwendung der gegebenenfalls notwendigen Filterkriterien.

Das so erzeugte und gespeicherte Prozessprotokoll kann nun einem Process Mining System zur Verfügung gestellt werden, um die in dem Prozessprotokoll gespeicherten Prozesse zu analysieren.

Jeder in dem Prozessprotokoll gespeicherte Datensatz repräsentiert einen Prozessschritt (Aktivität / Ereignis) eines in den externen Computersystemen EC1 bis EC3 ausgeführten Prozesses. In dem Prozessprotokoll können Prozessschritte mehrerer Prozesse gespeichert sein.

Die Datenstruktur des Prozessprotokolls umfasst hierbei zumindest
- ein erstes Attribut, in dem eine eindeutige Kennung des Prozesses des jeweiligen Prozessschrittes gespeichert ist,
- ein zweites Attribut, in dem eine Kennung des jeweiligen Prozessschrittes gespeichert ist, und
- ein drittes Attribut, in dem eine Reihenfolge der Prozessschritte innerhalb eines Prozesses gespeichert ist.

Die Reihenfolge der Prozessschritte innerhalb eines Prozesses kann durch den oben erwähnten Zeitstempel angegeben werden, der für jede Aktivität (Prozessschritt) aus den entsprechenden Tabellen ausgelesen wird.

Die eindeutige Kennung des Prozesses kann beispielsweise aus der Basistabelle ausgelesen werden. Für Bestellungen, die in der Tabelle T3 gespeichert sind, kann beispielsweise die (eindeutige) Bestellnummer ausgelesen werden und als Prozesskennung in dem Prozessprotokoll verwendet werden.

Die Kennung des jeweiligen Prozessschrittes (die nicht eindeutig sein muss) kann aus den Spaltennamen und/oder Tabellennamen und/oder aus Attributswerten ermittelt werden. Beispiel: In der Tabelle T3 sind die Spalten "Erstellt" und "Bestätigt" vorhanden, in denen für jede Bestellung das Erstelldatum und (sofern bestätigt) das Bestätigungsdatum gespeichert sind. Die Tabelle T3 heißt "Bestellungen". Für die oben genannten Aktivitäten (Prozessschritte) "Erzeugen einer Bestellung" und "Bestätigen einer Bestellung" können die Kennungen "Bestellung erstellt" (aus dem Tabellenamen "Bestellungen" und dem Spaltennamen "Erstellt") und "Bestellung bestätigt" (aus dem Tabellenamen "Bestellungen" und dem Spaltennamen "Bestätigt") erzeugt werden und für den jeweiligen Prozessschritt in dem dritten Attribut des Prozessprotokolls gespeichert werden.

Vorteilhaft ist es, wenn das Prozessprotokoll bzw. die darin gespeicherten Datensätze zunächst nach dem ersten Attribut und dann nach dem dritten Attribut sortiert werden. Damit liegen die zu einem Prozess gehörenden Prozessschritte in gruppierter Form vor, wobei gleichzeitig die zu einem Prozess gehörenden Prozessschritte zeitlich sortiert sind.

Das Prozessprotokoll kann als ganzes oder teilweise im Arbeitsspeicher gespeichert werden. Vorteilhaft ist es ferner, wenn die zu einem Prozess gehörenden Prozessschritte im Arbeitsspeicher an benachbarten Adressen gespeichert werden, und zwar sortiert nach dem dritten Attribut. Damit können in vorteilhafter Weise Vorgänger/Nachfolger-Beziehungen der Prozessschritte innerhalb eines Prozesses ermittelt werden, ohne dass solche Vorgänger/Nachfolger-Beziehungen gespeichert werden müssen. Denn bei einem rein sequentiellen Prozess (ohne parallele Teilprozesse) ergibt sich die Vorgänger/Nachfolger-Beziehung direkt aus den Adressen, in denen die Prozessschritte gespeichert sind. Das Process Mining System kann zudem das Prozessprotokoll als Stream sequenziell und in der richtigen Reihenfolge aus dem Arbeitsspeicher auslesen und verarbeiten. So kann beispielsweise in O(*n*) ein kompletter Prozessgraph erzeugt und visualisiert werden, der die Prozessschritte aller in dem Prozessprotokoll gespeicherten Prozesse umfasst. Bei Prozessen mit parallelen Teilprozessen kann zudem in O(*n*) eine vollständige Prozesshierarchie erzeugt werden, die dann ebenfalls als Prozessgraph visualisiert werden kann.

Die Möglichkeit der linearen Verarbeitung des Prozessprotokolls in dem Process Mining System ist von grundlegender Bedeutung, da typische Prozessprotokolle (z.B. in einem Unternehmen, das jährlich mehrere hunderttausend Bestellung vom Erzeugen der Bestellung bis zum Bezahlen der bestellten Ware verarbeitet, wobei jede Bestellung bis zu hundert oder mehr Aktivitäten aufweisen kann) mehrere Millionen bis hin zu mehreren hundert Millionen Aktivitäten (Datensätze) aufweisen.

Für das erstmalige Erstellen des Prozessprotokolls (durch Ausführen der Transformation) können die Daten der in das interne Computersystem importierten Tabellen verwendet werden. Es ist aber auch möglich hierfür auf die in den externen Computersystemen EC1 bis EC3 gespeicherten Daten zurückzugreifen.

Nach dem erstmaligen Erstellen des Prozessprotokolls kann die Transformation zyklisch, bei Bedarf oder nach bestimmten Regeln ausgeführt werden, beispielsweise alle zehn Minuten. Bei jedem Ausführen der Transformation werden die seit dem letzten Ausführen der Transformation in den externen Computersystemen hinzugekommen Aktivitäten extrahiert und dem Prozessprotokoll hinzugefügt.

Vorstehend wurde das erfindungsgemäße Verfahren mit Bezug auf externe Computersysteme EC1 bis EC3 beschrieben, bei denen es sich um Systeme handelt, mit deren Hilfe Geschäftsprozesse abgewickelt werden.

Bei den externen Systemen EC1 bis EC3 kann es sich aber auch physikalische Einrichtungen, etwa Maschinen handeln, die beispielsweise im Rahmen einer Verarbeitung eines Produktes entlang einer Produktions- und/oder Fertigungsstraße Daten bereitstellen, die eine Aktivität bzw. einen Prozessschritt eines Fertigungsprozesses repräsentieren. Diese Daten können in einer der Maschine zugeordneten Speichereinrichtung gespeichert werden, beispielsweise in Tabellen eines Datenbanksystems. Diese Tabellen können dann in das vorstehend beschriebene interne Computersystem importiert werden, um daraus gemäß dem vorstehend beschriebenen Verfahren Prozessprotokolle zu erzeugen.

So kann es sich beim externen System EC1 um eine Schleifmaschine handeln. Die Schleifmaschine protokolliert beispielsweise den Start und das Ende eines Schleifvorganges und speichert diese Daten zusammen mit einer Produktkennung in der ihr zugeordneten Datenbank.

Bei dem externen System EC2 kann es sich um eine Lackiereinrichtung handeln, die mit einer anderen Datenbank gekoppelt ist. Die Lackiereinrichtung kann einen Sensor zum Messen der aufgetragenen Lackdicke aufweisen, um gegebenenfalls einen Lackiervorgang an einem Produkt so lange zu wiederholen, bis die gewünschte Lackdicke erreicht wurde. Die Lackiereinrichtung kann den Start und das Ende eines gesamten Lackiervorganges sowie Start und Ende der jeweiligen Wiederholungen zusammen mit den jeweils gemessenen Lackdicken protokollieren und zusammen mit einer Produktkennung in der ihr zugeordneten Datenbank speichern.

Aus den diesen beiden Maschinen zugeordneten Tabellen können gemäß dem erfindungsgemäßen Verfahren die Aktivitäten (Prozessschritte)
- Beginn Schleifen
- Ende Schleifen
- Beginn Lackieren
- Ende Lackieren
- Beginn Wiederholung Lackieren (mit der gemessenen Lackdicke)
- Ende Wiederholung Lackieren (mit der gemessenen Lackdicke)
ermittelt werden.

Mit Hilfe der Produktkennung können die einzelnen Aktivitäten einem bestimmten Verarbeitungsprozess zugeordnet werden.

Die hierfür erzeugten Prozessprotokolle können von einem Process Mining System analysiert werden, um beispielsweise zu erkennen, welche Produkte zu einer Verzögerung in einem nachfolgenden Montageprozess führen, weil etwa bei bestimmten Produkten der Lackiervorgang besonders häufig wiederholt werden muss.

**Fig. 2** zeigt ein Ablaufdiagramm des erfindungsgemäßen Verfahrens zum Erzeugen von Prozessprotokollen.

In einem ersten Schritt S1 werden die Datentabellen aus unterschiedlichen Systemen in das interne Computersystem importiert. Die unterschiedlichen Systeme, aus denen die Datentabellen importiert werden, können die mit Bezug auf Fig. 1 gezeigten externen Computersystems EC1 bis EC3 sein, und/oder Produktionseinrichtungen, Verarbeitungseinrichtungen oder sonstige technische Einrichtungen, die Daten zu ausgeführten Prozessen / Teilprozessen bereitstellen. Bei diesen Systemen kann es sich um verteilte Systeme (z.B. um Produktionseinrichtungen an unterschiedlichen Standorten) und/oder um Cloud-Systeme handeln.

Sofern es sich bei den zu importierenden Datentabellen um Daten aus Datenbanksystemen handelt, können die Datentabellen direkt in ein Datenbanksystem des internen Computersystems importiert werden.

Bei den zu importierenden Datentabellen muss es sich aber nicht notwendigerweise um Tabellen eines Datenbanksystems handeln. Die zu importierenden Daten können in dem externen Computersystem beispielsweise auch als eine oder mehrere strukturierte Textdatei/en vorliegen. In diesem Fall ist es vorteilhaft, die Daten dennoch in einem Datenbanksystem des internen Computersystems zu speichern. Gegebenenfalls müssen die zu importierenden Daten vor dem Speichern in dem Datenbanksystem aufbereitet werden.

Nach dem ersten Schritt S1 sind sämtliche Daten der externen Computersysteme, für die Prozessprotokolle erzeugt werden sollen, in dem internen Computersystem gespeichert.

Nachfolgend werden beispielhaft vier Tabellen mit beispielhaften Daten angegeben, die aus externen Computersystemen importiert worden sind, wobei die Tabellen 1 und 2 aus einem ersten Computersystem (z.B. ein On Premise ERP System) und die Tabellen 3 und 4 aus einem zweiten Computersystem (z.B. ein Cloud CRM System) in das interne Computersystem importiert wurden.

**Tabelle T1 - Order Information (Bestellinformationen)**

| **Order Number** | **Creation Date** | **Vendor** | **Price** | **Amount** |
|---|---|---|---|---|
| 1 | 01.01.2018 | ABC | 100 | 10 |
| 2 | 24.01.2018 | XYZ | 2 | 12 |
| ... | ... | ... | ... | ... |

**Tabelle T2 - Order History (Bestellhistorie)**

| **Date** | **Order Number** | **Field** | **Old value** | **New value** | **Who** |
|---|---|---|---|---|---|
| 01.01.2018 | 1 | Price | 99 | 130 | Joe |
| 02.01.2018 | 1 | Amount | 9 | 7 | Joe |
| 03.01.2018 | 1 | Amount | 7 | 10 | Joe |
| 04.01.2018 | 1 | Price | 130 | 95 | Bill |
| 05.01.2018 | 1 | Price | 95 | 100 | Joe |
| ... | | ... | ... | ... | ... |

**Tabelle T3 - Vendor Calls (Kontaktaufnahmen zum Verkäufer)**

| **Vendor** | **Account Executive** | **Type** | **Reference ID** | **Date** |
|---|---|---|---|---|
| ABC | George | Call | 1 | 02.01.2018 |
| ABC | George | Mail | 1 | 04.01.2018 |
| ... | ... | ... | ... | |

**Tabelle T4 - Vendor Information (Verkäuferinformationen)**

| **Vendor** | **Create date** | **Country** | **State** |
|---|---|---|---|
| ABC | 02.01.2017 | DE | BY |
| XYZ | 08.04.2017 | DE | BY |
| ... | ... | ... | ... |

Nachdem die Datentabellen vollständig importiert wurden, werden in dem zweiten Schritt S2 die Beziehungen (Fremdschlüsselbeziehungen) zwischen den einzelnen importierten Datentabellen rekonstruiert. Bei den vier vorstehend genannten Tabellen wären dies folgende Beziehungen:

| | | | |
|---|---|---|---|
| a) | T1 (Order Number) | ←→ | T2 (Order Number) |
| b) | T1 (Order Number) | ←→ | T3 (Reference ID) |
| c) | T2 (Order Number) | ←→ | T3 (Reference ID) |
| d) | T3 (Vendor) | ←→ | T4 (Vendor) |
| e) | T3 (Vendor) | ←→ | T1 (Vendor) |

Tn (x) ←→ Tm (y) bedeutet hierbei, dass die Tabellen Tn und Tm über das Attribut x der Tabelle Tn und über das Attribut y der Tabelle Tm miteinander verknüpft sind.

Um die Beziehungen zwischen den importierten Datentabellen zu rekonstruieren, kann es vorteilhaft sein, neben den Datentabellen auch sogenannte Schematabellen aus den externen Computersystemen zu importieren. In den Schematabellen können Informationen zu den Beziehungen zwischen den importierten Datentabellen gespeichert sein.

So können zu den vorstehend genannten Tabellen T1 bis T4 Schematabellen au dem ersten Computersystem und aus dem zweiten Computersystem importiert werden. In den Schematabellen aus dem ersten Computersystem sind die Beziehungen zwischen den Tabellen T1 und T2 gespeichert, in den Schematabellen aus dem zweiten Computersystem sind die Beziehungen zwischen den Tabellen T3 und T4 gespeichert.

Unter Verwendung der Schematabellen können dann die Beziehungen zwischen den Tabellen T1 und T2 bzw. zwischen den Tabellen T3 und T4 automatisch rekonstruiert werden.

Auch ohne Verwendung der genannten Schematabellen können die Beziehungen zwischen den Tabellen T1 und T2 bzw. zwischen den Tabellen T3 und T4 automatisch rekonstruiert werden. Dies ist beispielsweise dann möglich, wenn
- ein Attribut (Spaltenname) der einen Datentabelle identisch oder ähnlich zu einem Attribut (Spaltenname) der anderen Datentabelle ist, oder
- die Kombination aus Tabellenname und Spaltenname identisch oder ähnlich ist zu einem Spaltenname einer anderen Datentabelle (z.B. die Tabelle "Vendor" enthält eine Spalte "ID" und die Tabelle "Order" enthält eine Spalte "VendorID" - in diesem Fall wären die Tabellen "Vendor" und "Order" über die Attribute "ID" und "VendorID" miteinander verknüpft).

Für oben genannte Tabellen könnten so die Beziehungen

| | | | |
|---|---|---|---|
| T1 | (Order Number) | ←→ | T2 (Order Number) |
| T3 | (Vendor) | ←→ | T4 (Vendor) |

auch ohne Schematabellen automatisch rekonstruiert werden.

Zudem könnte auch die Beziehung

| | | | |
|---|---|---|---|
| T3 | (Vendor) | ←→ | T1 (Vendor) |

automatisch erkannt werden, obwohl die Tabellen T1 und T3 aus unterschiedlichen externen System importiert wurden.

Zum automatischen Erkennen der Beziehungen zwischen den Tabellen T1 und T3 bzw. zwischen den Tabellen T2 und T3 (T1 und T2 wurden ja aus einem anderen Computersystem importiert als die Tabelle T3) kann auf weitere Heuristiken zurückgegriffen werden. Beispielsweise kann der Spaltenname analysiert werden (enthält der Spaltenname z.B. den Textbestandteil "ID", so kann mit großer Wahrscheinlichkeit davon ausgegangen werden, dass in dieser Spalte Fremdschlüsselwerte gespeichert werden). Alternativ oder zusätzlich können auch die importierten Schematabellen verwendet werden, um für die importierten Tabellen die Primärschlüsselattribute und die Fremdschlüsselattribute zu ermitteln.

Für die Tabelle T1 kann beispielsweise anhand der importierten Schematabellen das Attribut "Order Number" als Primärschlüsselattribut ermittelt werden. Für die Tabelle T3 kann beispielsweise das Attribut "Reference ID" aufgrund einer Analyse der Spaltennamen als Fremdschlüsselattribut ermittelt werden. Damit kann die Beziehung

| | | | |
|---|---|---|---|
| T1 | (Order Number) | ←→ | T3 (Reference ID) |

automatisch ermittelt werden.

In analoger Weise kann auch die Beziehung

| | | | |
|---|---|---|---|
| T2 | (Order Number) | ←→ | T3 (Reference ID) |

automatisch ermittelt werden.

Die so ermittelten Beziehungen zwischen den Tabellen T1 bis T4 können durch einen Nutzer bestätigt werden. Zusätzlich kann es vorgesehen sein, dass ein Nutzer zusätzliche Beziehungen erzeugt / hinzufügt (etwa Beziehungen, die nicht automatisch ermittelt wurden) oder bestehende Beziehungen wieder entfernt (etwa Beziehungen, die das System falsch ermittelt hat)

Nachdem die Beziehungen rekonstruiert wurden, existiert im internen Computersystem ein valides Datenbankschema, das die Tabellen und deren Beziehungen zueinander für alle aus den externen Computersystemen importierten Tabellen T1 bis T4 beschreibt. Werden diese Tabellen oder eine Teilmenge dieser Tabellen zu einem späteren Zeitpunkt erneut in das interne Computersystem importiert, etwa um anderer Prozessprotokolle zu erzeugen, dann kann das interne Computersystem auf dieses valides Datenbankschema zurückgreifen um, Beziehungen zwischen den Tabellen zu ermitteln. In dieser Hinsicht ist das interne Computersystem selbstlernend ausgestaltet, d.h. es lernt sukzessive Beziehungen zwischen importierten Datentabellen, sodass das Computersystem zu einem späteren Zeitpunkt auf die gelernten Beziehungen zurückgreifen kann.

Nachdem die Beziehungen ermittelt und gegebenenfalls gespeichert wurden, werden in dem nächsten Schritt S3 Businessobjekte (auch Case Objekt genannt) ermittelt, die sich für das Erzeugen eines Prozessprotokolls eignen. Hierbei werden jene Datentabellen ausgewählt, in denen solche Businessobjekte gespeichert sind (oder jedenfalls mit großer Wahrscheinlichkeit gespeichert sind). Dies erfolgt vorteilhafter Weise automatisch.

In dem vorliegenden Beispiel kann das interne Computersystem die Tabellen T1 (Bestellungen) und T4 (Verkäufer) als Businessobjekte erkennen. Denn die Tabelle T1 speichert Basisinformationen zu Bestellungen und die Tabelle T4 speichert Basisinformation zu Verkäufern. Die Tabellen T2 und T3 hingegen speichern Änderungsinformation (Tabelle T2: Preisänderungen / Mengenänderungen einer Bestellung) bzw. Aktionen (Tabelle T3: Kontaktaufnahmen zu Verkäufern).

Erkennt das interne System mehrere Businessobjekte als geeignet für das Erzeugen eines Prozessprotokolls, kann eines der Businessobjekte von einem Nutzer ausgewählt werden. Das interne Computersystem kann Informationen zu dem ausgewählten Businessobjekt speichern, sodass das interne Computersystem zu einem späteren Zeitpunkt auf diese Informationen zugreifen kann. Wird das erfindungsgemäße Verfahren mehrfach durchgeführt, lernt das interne System sukzessive, welche Businessobjekte wie oft ermittelt wurden und welche Businessobjekte vom Nutzer wie oft ausgewählt wurden. Die dem ausgewählten Businessobjekt zugehörige Datentabelle wird auch als erste Datentabelle bezeichnet (oben in Fig. 1 auch als Basistabelle bezeichnet).

In diesem Beispiel wird das Businessobjekt Bestellungen (Datentabelle T1) ausgewählt.

In einem weiteren Schritt S4 ermittelt das interne Computersystem ausgehend von dem ausgewählten Businessobjekt (Bestellungen) bzw. ausgehend von der ersten Datentabelle (T1) sodann weitere Datentabellen (auch als zweite Datentabellen bezeichnet), die für das Erzeugen von Prozessprotokollen geeignet sein können. Für die erste Datentabelle T1 wären das die Datentabellen T2 und T3, die einerseits in direkter Beziehung zu der ersten Datentabelle T1 stehen und andererseits Änderungsinformationen bzw. Aktionen speichern.

Basierend auf der ersten Datentabelle T1 und den zweiten Datentabellen T2, T3 und den Beziehungen zwischen diesen Datentabellen ermittelt das interne Computersystem in dem nachfolgenden Schritt S5 Aktivitäten, für die Prozessprotokolle erzeugt werden können.

Für die Datentabellen T1, T2 und T3 ermittelt das interne Computersystem in diesem Beispiel folgende Aktivitäten:

| | |
|---|---|
| Create Order | basierend auf der Tabelle T1 und dem Attribut "Creation Date" der Tabelle T1 |
| Change Price | basierend auf der Tabelle T2 und dem Attribut "Date" der Tabelle T2 sowie dem Attribut "Field" der Tabelle T2, wobei Attributswerte des Attributes "Field" gefiltert werden (Field = Price) |
| Change Amount | basierend auf der Tabelle T2 und dem Attribut "Date" der Tabelle T2 sowie dem Attribut "Field" der Tabelle T2, wobei Attributswerte des Attributes "Field" gefiltert werden (Field = Amount) |
| Change Order | basierend auf der Tabelle T2 und dem Attribut "Date" der Tabelle T2 |
| Call Vendor | basierend auf der Tabelle T3 und dem Attribut "Date" der Tabelle T3 |

Die Bezeichnungen der Aktivitäten kann das interne Computersystem automatisch erzeugen, beispielsweise aus dem Tabellennamen und dem jeweiligen Datumsattribut (z.B. "Create Order" aus "Order Information" und "Creation Date").

Bei den vorstehend ermittelten Aktivitäten "Change Price" und "Change Amount" erzeugt das interne Computersystem basierend auf dem Attribut "Field" zudem einen Filter, um bestimmte Aktivitäten in der Tabelle T2 zu filtern. Hierbei kann das Computersystem annehmen, dass aufgrund des Tabellennamens "Order History" und der in dieser Tabelle vorkommenden Spalte "Field" die Tabelle T2 Änderungen zu verschiedenen Feldern (z.B. Price und Amount) der Tabelle T1 (T1 und T2 sind ja über die Spalten Order Number miteinander verknüpft) speichert.

Basierend auf diesen Aktivitäten können nachfolgend mehrere Prozessprotokolle erzeugt werden, etwa ein Prozessprotokoll für Bestellungen oder ein Prozessprotokoll für Änderungen von Bestellungen.

Diese Aktivitäten können aber auch kombiniert werden, um beispielsweise Prozessprotokolle für übergeordnete Prozesse zu erzeugen. So ist es beispielsweise möglich, ein Prozessprotokoll zu erzeugen, mit dem Änderungen von Bestellungen aufgrund von Kontaktaufnahmen mit dem Verkäufer analysiert werden können. Hierfür können die Aktivitäten Create Order, Change Order und Call Vendor miteinander kombiniert werden. Diese "übergeordnete" Aktivität (=übergeordneter Prozess, der mehrere Aktivitäten umfasst) basiert demnach auf den Tabellen T1, T2 und T3, und auf den Spalten "Creation Date" der Tabelle T1, "Date" der Tabelle T2 und "Date" der Tabelle T3. Die Beziehungen zwischen diesen drei Tabellen wurden bereits ermittelt und stehen für das nachfolgende Erzeugen des Prozessprotokolls zur Verfügung.

Ein Nutzer kann nunmehr eine oder mehrere Aktivitäten auswählen, zu denen ein oder mehrere Prozessprotokolle erzeugt werden sollen. Wählt der Nutzer mehrere Aktivitäten aus, so kann das interne Computersystem auf Anweisung des Nutzers für jede Aktivität ein Prozessprotokoll erzeugen oder für alle ausgewählten Aktivtäten ein gemeinsames Prozessprotokoll.

Alternativ kann das Computersystem auch ohne Nutzerinteraktion für alle ermittelten Aktivitäten jeweils automatisch ein Prozessprotokoll erzeugen.

In dem nachfolgenden Schritt S6 erzeugt das interne Computersystem für jede ausgewählte Aktivität (oder alternativ für alle Aktivitäten oder für Kombinationen von Aktivitäten) eine ausführbare Transformation, mit der Daten aus den externen Computersystemen EC1 bis EC3 in ein Prozessprotokoll transformiert werden können.

Die Transformation, wenn sie ausgeführt wird, extrahiert zumindest aus den notwendigen Attributen der für das jeweilige Prozessprotokoll relevanten Tabellen und unter Berücksichtigung der relevanten Beziehungen zwischen den für das jeweilige Prozessprotokoll relevanten Tabellen Daten und speichert die extrahierten Daten als Prozessprotokoll. Das Extrahieren der Daten erfolgt unter Verwendung der gegebenenfalls notwendigen Filterkriterien, die durch die jeweiligen Aktivitäten vorgegeben sein können.

Die so erzeugte Transformation wird dann gespeichert und in dem Schritt S7 ausgeführt.

Das durch die Ausführung der Transformation erzeugte Prozessprotokoll wird gespeichert und zur Auswertung einem Process Mining System zur Verfügung gestellt.

Die Transformation kann mehrfach ausgeführt werden, etwa zyklisch, wodurch das Prozessprotokoll um neue in den externen Systemen ausgeführte Prozessschritte bzw. um neu ausgeführte Prozesse angereichert werden kann.

Jeder Datensatz eines Prozessprotokolls repräsentiert hierbei einen Prozessschritt (Aktivität / Ereignis) eines in den externen Computersystemen ausgeführten Prozesses, wobei in dem Prozessprotokoll auch Prozessschritte mehrerer Prozesse gespeichert werden können.

Die notwendigen Attribute für das Erzeugen des Prozessprotokolls sind in jedem Fall
- eine eindeutige Kennung des Prozesses des jeweiligen Prozessschrittes,
- eine Kennung des jeweiligen Prozessschrittes, und
- eine Reihenfolge der Prozessschritte innerhalb eines Prozesses.

Soll für die oben genannte Aktivität Change Order ein Prozessprotokoll erzeugt werden, so wären für jeden Datensatz des Prozessprotokolls die hierfür notwendigen Attributswerte
- Order Number (= Kennung des Prozesses),
- "Name" (= Kennung des Prozessschrittes - wird vom System automatisch erzeugt), und
- Date (= Reihenfolge).

Basierend auf den oben angegebenen Tabellen ergibt sich für die Aktivität Change Order folgendes Prozessprotokoll:

| **Kennung des Prozesses** | **Kennung des Prozessschrittes** | **Reihenfolge** |
|---|---|---|
| 1 | Change Price | 01.01.2018 |
| 1 | Change Amount | 02.01.2018 |
| 1 | Change Amount | 03.01.2018 |
| 1 | Change Price | 04.01.2018 |
| 1 | Change Price | 05.01.2018 |

Die Kennung des jeweiligen Prozessschrittes kann das System aus den Werten der Spalte "Field" erzeugen.

## Patentansprüche

1. Computer-implementiertes Verfahren zum Erzeugen eines Prozessprotokolls in einem lokalen Computersystem, das einen Prozessor und eine Speichereinrichtung aufweist, wobei das Prozessprotokoll aus Rohdaten erzeugt wird, die teilweise in einem ersten externen Computersystem und teilweise in einem zweiten externen Computersystem gespeichert sind, wobei die Rohdaten in den externen Computersystemen in einer Anzahl von Datentabellen gespeichert werden, wobei die Rohdaten Daten umfassen, die bei der Ausführung von Prozessen in dem ersten externen Computersystem und in dem zweiten externen Computersystem erzeugt werden, und wobei das Verfahren umfasst:
(a) importieren der Datentabellen aus dem ersten externen Computersystem und aus dem zweiten externen Computersystem in das lokale Computersystem und Speichern der importierten Datentabellen in der Speichereinrichtung des lokalen Computersystems,
(b) in dem lokalen Computersystem, rekonstruieren der Beziehungen zwischen den importierten Datentabellen,
(c) in dem lokalen Computersystem, ermitteln und auswählen einer ersten Datentabelle aus der Anzahl von importierten Datentabellen, die Objekte enthält, zu denen das Prozessprotokoll erzeugt werden soll,
(d) in dem lokalen Computersystem, ermitteln und auswählen einer Anzahl von zweiten Datentabellen aus der Anzahl von importierten Datentabellen, die für das Erzeugen des Prozessprotokolls benötigt werden, basierend auf der ausgewählten ersten Datentabelle und basierend auf den Beziehungen zwischen den importierten Datentabellen,
(e) in dem lokalen Computersystem, erzeugen einer ausführbaren Transformation, die angepasst ist, basierend
- auf der ausgewählten ersten Datentabelle,
- auf den ausgewählten zweiten Datentabellen und
- auf den Beziehungen zwischen der ausgewählten ersten Datentabelle und den ausgewählten zweiten Datentabellen
Daten aus der ersten Datentabelle und aus den zweiten Datentabellen zu extrahieren und die extrahierten Daten als Prozessprotokoll zu speichern,
(f) in dem lokalen Computersystem, ausführen der Transformation und Speichern der extrahierten Daten als Prozessprotokoll und Bereitstellen des erzeugten Prozessprotokolls einem Process Mining System zum Analysieren und Rekonstruieren der in dem ersten externen Computersystem und in dem zweiten externen Computersystem ausgeführten Prozesse.

2. Verfahren nach Anspruch 1, wobei zumindest eine der ausgewählten Datentabellen aus dem ersten externen Computersystem importiert wird, und zumindest eine der ausgewählten Datentabellen aus dem zweiten externen Computersystem importiert wird.

3. Verfahren nach Anspruch 1, wobei beim Ausführen der Transformation in dem Schritt (f) die Daten aus den in den externen Computersystemen gespeicherten Datentabellen extrahiert werden.

4. Verfahren nach Anspruch 1, wobei beim Rekonstruieren der Beziehungen zwischen den importierten Datentabellen in dem Schritt (b) ermittelt wird, über welche Attribute die Datentabellen in Beziehung zueinander stehen.

5. Verfahren nach dem vorhergehenden Anspruch, wobei zwei Datentabellen dann miteinander in Beziehung stehen, wenn ein Attribut der einen Datentabelle identisch oder ähnlich zu einem Attribut der anderen Datentabelle ist.

6. Verfahren nach Anspruch 1, wobei die zwischen jeweils zwei importierten Datentabellen rekonstruierten Beziehungen gespeichert werden, wobei die Namen der beiden Datentabellen, die jeweiligen Attribute und eine Zuordnung der Attribute der einen Datentabelle zu den Attributen der anderen Datentabelle gespeichert werden.

7. Verfahren nach Anspruch 1, wobei
- zu den aus dem ersten externen Computersystem importierten Datentabellen ein dazugehöriges erstes Datenmodell aus dem ersten externen Computersystem in das lokale Computersystem importiert wird, wobei die Beziehungen zwischen den aus dem ersten externen Computersystem importierten Datentabellen anhand des ersten Datenmodells rekonstruiert werden,
- zu den aus dem zweiten externen Computersystem importierten Datentabellen ein dazugehöriges zweites Datenmodell aus dem zweiten externen Computersystem in das lokale Computersystem importiert wird, wobei die Beziehungen zwischen den aus dem zweiten externen Computersystem importierten Datentabellen anhand des zweiten Datenmodells rekonstruiert werden,
sodass nur die Beziehungen zwischen den Datentabellen aus dem ersten externen Computersystem und den Datentabellen aus dem zweiten externen Computersystem ohne Verwendung eines Datenmodells rekonstruiert werden müssen.

8. Verfahren nach Anspruch 1, wobei beim Ermitteln und Auswählen einer ersten Datentabelle in dem Schritt (c) ermittelt wird, welche Datentabelle eine oder mehrere Bedingungen erfüllt, wobei die Bedingungen ausgewählt sind aus der Gruppe, umfassend
- die Datentabelle enthält im Vergleich zu den anderen Datentabellen wenige Datensätze,
- die Datentabelle enthält ein Attribut, in dem Zeitstempel gespeichert sind,
- die Datentabelle wird von wenigen anderen Datentabellen referenziert,
- und Kombinationen hiervon.

9. Verfahren nach dem vorhergehenden Anspruch, wobei Informationen zu der ausgewählten ersten Datentabelle gespeichert werden.

10. Verfahren nach Anspruch 1, wobei beim Ermitteln und Auswählen einer Anzahl von zweiten Datentabellen in dem Schritt (d) jene Datentabellen ausgewählt werden, die eine oder mehrere Bedingungen erfüllen, wobei die Bedingungen ausgewählt sind aus der Gruppe, umfassend
- die Datentabellen enthalten im Vergleich zu der ersten Datentabelle viele Datensätze,
- die Datentabelle werden direkt oder indirekt von der ersten Datentabelle referenziert
- die Datentabellen enthalten jeweils ein Attribut, in dem Zeitstempel gespeichert sind,
- und Kombinationen hiervon.

11. Verfahren nach dem vorhergehenden Anspruch, wobei Informationen zu den ausgewählten zweiten Datentabellen und zu den Beziehungen zwischen den ausgewählten zweiten Datentabellen und der ersten Datentabelle gespeichert werden.

12. Verfahren nach Anspruch 1, wobei beim Erzeugen der ausführbaren Transformation in dem Schritt (e) ermittelt wird, welche Attribute der ausgewählten ersten Datentabelle und der ausgewählten zweiten Datentabellen beim Extrahieren der Daten berücksichtigt werden.

13. Verfahren nach dem vorhergehenden Anspruch, wobei beim Ausführen der Transformation in dem Schritt (f) Datensätze aus der ersten Datentabelle und aus den zweiten Datentabellen ausgelesen werden, wobei die ausgelesenen Datensätze die Attributswerte der für die jeweilige Datentabelle ermittelten Attribute umfasst, wobei die ausgelesenen Datensätze als Prozessprotokoll gespeichert werden, wobei jeder in dem Prozessprotokoll gespeicherte Datensatz einen Prozessschritt (Event) eines in dem ersten externen Computersystem und in dem zweiten externen Computersystem ausgeführten Prozesses repräsentiert.

14. Verfahren nach dem vorhergehenden Anspruch, wobei die ausgelesenen Datensätze gemäß einer vorbestimmten Datenstruktur in dem Prozessprotokoll gespeichert werden, wobei die vorbestimmte Datenstruktur zumindest umfasst:
- ein erstes Attribut, in dem eine eindeutige Kennung des Prozesses des jeweiligen Prozessschrittes gespeichert ist;
- ein zweites Attribut, in dem eine Kennung des jeweiligen Prozessschrittes gespeichert ist; und
- ein drittes Attribut, in dem eine Reihenfolge der Prozessschritte innerhalb eines Prozesses gespeichert ist.

15. Verfahren nach dem vorhergehenden Anspruch, wobei die Attributswerte der Attribute des Prozessprotokolls aus
- den Attributswerten der ausgelesenen Datensätze und/oder
- aus den Tabellennamen und/oder Spaltennamen der ausgewählten ersten Datentabelle und/oder der ausgewählten zweiten Datentabellen
ermittelt werden.
